# EUROPÄISCHE PATENTSCHRIFT

(11) **EP 0 355 523 B1**
(45) Veröffentlichungstag und Bekanntmachung des Hinweises auf die Patenterteilung: **29.09.1993**
(21) Anmeldenummer: 89114401.6
(22) Anmeldetag: 04.08.1989
(51) Int. Cl.: C12C 5/02, C12G 3/08

(54) **Verfahren zur Herstellung von alkoholarmem Bier**
Process for the production of beer having a low alcohol content
Procédé de fabrication de bière faiblement alcoolisée

(30) Priorität: 22.08.1988 CH 3111/88
(43) Veröffentlichungstag der Anmeldung: 28.02.1990
(73) Patentinhaber: BRAUEREI FELDSCHLÖSSCHEN, CH-4310 Rheinfelden (CH)
(72) Erfinder: Schur, Fritz, Dr., CH-4312 Magden (CH); Sauer, Peter, CH-8708 Männedorf (CH)
(74) Vertreter: Lauer, Joachim, Dr.

(56) Entgegenhaltungen:
- FR-A- 2 398 801
- GB-A- 2 085 027
- GB-A- 2 112 619
- JOURNAL OF THE INSTITUTE OF BREWING, Band 85, Mai/Juni 1979; N. HASHIMOTO et al., Seiten 136-140#

## Beschreibung

### Technisches Gebiet

Die vorliegende Erfindung bezieht sich auf ein Verfahren zur Herstellung von alkoholarmem Bier, bei welchem eine Würze durch Kochen zubereitet wird.

### Stand der Technik

Aus der DE-A 32 13 056.2 ist ein Verfahren der genannten Art bekannt, bei welchem eine aus einem Gärprozess entnommene Hefe bei erniedrigter Temperatur im Bereich unter 0°C mit einer zuvor durch Kochen hergestellten Würze in Kontakt gebracht wird. Bei der niedrigen Temperatur unterbleibt die Alkoholbildung während des Kontaktes der Würze mit der Hefe praktisch vollständig. Durch den Hefekältekontakt ergibt sich dennoch die gewünschte Geschmacksveränderung der Würze in Richtung Bier.

Mit dem bekannten Verfahren werden recht gute Ergebnisse erzielt. Allerdings weist das fertige alkoholarme Bier eine gewisse störende Nachbittere auf.

### Darstellung der Erfindung

Es ist insbesondere Aufgabe der vorliegenden Erfindung, ein Verfahren anzugeben, durch das die störende Nachbittere in alkoholarmem Bier eliminierbar ist und dass zu einem Getränk mit einem ausgewogenen, harmonischen Geschmack führt.

Die genannte Aufgabe wird gemäss der vorliegenden Erfindung gelöst durch ein Verfahren, wie es im Patentanspruch 1 gekennzeichnet ist.

Vorteilhafte sowie bevorzugte Ausgestaltungen des erfindungsgemässen Verfahrens sind in den abhängigen Patentansprüchen gekennzeichet.

Bei dem erfindungsgemässen Verfahren wird demnach zur Würze vor, während oder auch nach dem Kochen, solange die Würze noch heiss ist, Ascorbinsäure zugegeben. Durch die Zugabe der Ascorbinsäure zur heissen Würze ist die sonst auftretende störende Nachbittere praktisch völlig eliminierbar.

Wie Untersuchungen ergeben haben, sind für die Nachbittere vermutlich Bitterstoffe verantwortlich, welche beim Rösten des Malzes durch Oxidationsprozesse entstehen. Zwar sind diese Bitterstoffe in einem normalen Bier mit üblichem Alkoholgehalt ebenfalls vorhanden, doch ist dort deren geschmackliche Wirkung durch den Alkohol weitgehend maskiert. Der durch die Erfindung erreichte vorteilhafte Effekt lässt sich vermutlich dadurch erklären, dass durch die Ascorbinsäure die genannten Bitterstoffe in ausreichendem Masse reduziert werden. Für den Ablauf der Reduktionsprozesse ist die hohe Temperatur beim Kochen zweifellos von entscheidender Bedeutung. Durch die bekannte und vielfach übliche Zugabe von Ascorbinsäure als Antioxidanzmittel zur kalten Würze nach dem Kochen oder gar erst zum fertigen Getränk zur Erhöhung von dessen Haltbarkeit wird der mit der Erfindung angestrebte Effekt nicht erreicht. Wie Analysen ergeben haben, wird tatsächlich ein erheblicher Teil der Ascorbinsäure beim Kochen verbraucht und steht insofern im fertigen Getränk als Antioxidanzmittel auch gar nicht mehr zur Verfügung.

Üblicherweise beträgt die Kochzeit der Würze bei Atmospärendruck zwischen 1 und 2 Stunden. Vorzugsweise wird die Ascorbinsäure zu Beginn der Kochphase nach dem Aufheizen der Würze auf die Kochtemperatur zu dieser zugegeben. Zur Erzielung des mit der Erfindung angestrebten Effekts genügt es, je nach dem Grad der zu eliminierenden Nachbittere, mitunter jedoch schon, die Ascorbinsäure erst in der Endphase des Kochens, beispielsweise ca. 15 min vor dem Ende des Kochens zur Würze zuzugeben. In Fällen, in denen die Würze nach dem eigentlichen Kochen noch eine genügend lange Zeit heiss bleibt oder heiss gehalten wird (z.B. oberhalb von 80°C für mindestens eine halbe Stunde), kann es auch ausreichend sein, die Ascorbinsäure erst nach dem Kochen zur Würze zuzugeben. Entsprechend ist es für den erfindungsgemäss angestrebten Erfolg auch weitgehend unerheblich, ob das Würzekochen bei etwa 100°C unter Atmospärendruck, unter Unterdruck bei z.B. 80°C oder unter Überdruck bei z.B. 120°C durchgeführt wird. Je höher die Temperatur der Würze, desto geringer kann die Einwirkungszeit der Ascorbinsäure auf diese gewählt werden. Allerdings sollte die Würze während der Einwirkungszeit der Ascorbinsäure eine Temperatur von nicht unter ca. 80°C aufweisen. Bei einer Würzetemperatur unter ca. 85°C sollte die Einwirkungszeit mindestens etwa eine halbe Stunde betragen.

Zur Erzielung des mit der Erfindung angestrebten Effektes genügt bereits die Zugabe von lediglich zwischen 1 bis 100 ppm Ascorbinsäure bezogen auf das fertige Getränk, abhängig von dessen Stammwürze. Bei einer Stammwürze von beispielsweise 7 Gew.-% wird vorzugsweise etwa 20 ppm Ascorbinsäure verwendet.

Es hat sich weiter als vorteilhaft erwiesen, eine möglichst sauerstoffarme Würze zu verwenden.

Das erfindungsgemässe Verfahren lässt sich insbesondere im Rahmen des eingangs erwähnten Verfahrens zur Herstellung von praktisch alkoholfreiem Bier nach dem Hefe-Kältekontaktverfahren einsetzen und trägt dort zu einer wesentlichen Geschmacksverbesserung des alkoholfreien Bieres bei. Auch bei der Herstellung von alkoholhaltigem Bier ist das erfindungsgemässe Verfahren mit Vorteil anwendbar.

## Patentansprüche

1. Verfahren zur Herstellung von alkoholarmen Bier, bei welchem eine Würze durch Kochen zubereitet wird, dadurch gekennzeichnet, dass zur Würze vor, während oder nach dem Kochen, solange sie noch eine Temperatur oberhalb von 80°C hat, Ascorbinsäure zugegeben wird.

2. Verfahren nach Anspruch 1, dadurch gekennzeichnet, dass die Ascorbinsäure spätestens 15 Minuten vor dem Abschluss des Kochens bei Atmosphärendruck zur Würze zugegeben wird.

3. Verfahren nach Anspruch 1, dadurch gekennzeichnet, dass die Ascorbinsäure unmittelbar vor dem Kochbeginn zur Würze zugegeben wird.

4. Verfahren nach Anspruch 1, dadurch gekennzeichnet, dass die Ascorbinsäure nach dem Kochen zur Würze zugegeben wird und dass die Temperatur der Würze nach der Zugabe der Ascorbinsäure für mindestens 30 min auf einem Wert oberhalb von 80°C gehalten wird.

5. Verfahren nach einem der Ansprüche 1 bis 4, dadurch gekennzeichnet, dass zwischen 1 und 100 ppm Ascorbinsäure, bezogen auf das fertige Getränk, zur Würze zugegeben wird.

6. Verfahren nach Anspruch 5, dadurch gekennzeichnet, dass 20 ppm Ascorbinsäure, bezogen auf das fertige Getränk, zur Würze zugegeben wird.

7. Verfahren nach einem der Ansprüche 1 bis 6, dadurch gekennzeichnet, dass eine sauerstoffarme Würze verwendet wird.

## Claims

1. Process for producing beer with a low alcohol content, in which a wort is prepared by boiling, characterized in that ascorbic acid is added to the wort before, during or after boiling for as long as it still has a temperature above 80°C.

2. Process according to claim 1, characterized in that the ascorbic acid is added to the wort at atmospheric pressure at the latest 15 minutes before the end of boiling.

3. Process according to claim 1, characterized in that the ascorbic acid is added to the wort immediately prior to the start of boiling.

4. Process according to claim 1, characterized in that the ascorbic acid is added to the wort after boiling and that the wort temperature following ascorbic acid addition is kept for at least 30 min. at a value above 80°C.

5. Process according to one of the claims 1 to 4, characterized in that between 1 and 100 ppm of ascorbic acid, based on the finished beverage, is added to the wort.

6. Process according to claim 5, characterized in that 20 ppm of ascorbic acid, based on the finished beverage, is added to the wort.

7. Process according to one of the claims 1 to 6, characterized in that a wort with a low oxygen content is used.

## Revendications

1. Procédé pour la fabrication de bière pauvre en alcool, dans lequel un moût est préparé par cuisson, caractérisé en ce qu'on ajoute au moût de l'acide ascorbique, pendant ou après la cuisson, tant que le moût est à une température supérieure à 80°C.

2. Procédé selon la revendication 1, caractérisé en ce que l'on ajoute l'acide ascorbique au plus tôt quinze minutes avant la fin de la cuisson du moût sous pression atmosphérique.

3. Procédé selon la revendication 1, caractérisé en ce qu'on ajoute l'acide ascorbique immédiatement avant le début de la cuisson du moût.

4. Procédé selon la revendication 1, caractérisé en ce que l'on ajoute l'acide ascorbique au moût après la cuisson et en ce que la température du moût est maintenue après l'addition de l'acide ascorbique à une valeur supérieure à 80°C pendant au moins trente minutes.

5. Procédé selon l'une quelconque des revendications 1 à 4, caractérisé en ce qu'entre 1 et 100 ppm d'acide ascorbique, prélevées sur la boisson prête, sont ajoutées au moût.

6. Procédé selon la revendication 5, caractérisé en ce que 20 ppm d'acide ascorbique, prélevées sur la boisson prête, sont ajoutées au moût.

7. Procédé selon l'une quelconque des revendications 1 à 6, caractérisé en ce qu'on utilise un moût pauvre en oxygène.
